# DEMANDE DE BREVET EUROPEEN

(11) **EP 0 531 206 A1**
(43) Date de publication de la demande: **10.03.1993**
(21) Numéro de dépôt: 92402390.6
(22) Date de dépôt: 02.09.1992
(51) Int. Cl.: B60S 1/48, F28D 7/02, F28F 9/02

(54) **Dispositif de chauffage d'un liquide de lave-glace, notamment pour véhicule automobile**

(30) Priorité: 03.09.1991 FR 9110858
(71) Demandeur: VALEO SYSTEMES D'ESSUYAGE, 78180 Montigny-Le-Bretonneux (FR)
(72) Inventeur: Soreau, Marc, F-75014 Paris (FR); Viaene, Alain, F-78180 Montigny-le-Bretonneux (FR)
(74) Mandataire: Gamonal, Didier

(57) **Abrégé**

L'invention concerne un dispositif de chauffage d'un liquide de lave-glace, notamment pour le pare-brise d'un véhicule automobile.

Ce dispositif de chauffage comprend une enceinte (10) limitée par une paroi généralement tubulaire (12) et propre à être traversée par un fluide chaud, ainsi qu'un serpentin (60) logé à l'intérieur de l'enceinte (10) et propre à être traversé par le liquide de lave-glace. L'enceinte comporte deux chambres périphériques (34) et (36) dont chacune est limitée par une paroi intérieure (38,42) munie d'un orifice intérieur (52,54) et par une paroi extérieure (40,44) munie d'un orifice extérieur (56,58), les extrémités (64) et (66) du serpentin étant engagées à étanchéité dans les orifices (52) et (54). Le dispositif comporte en outre des tubulures d'entrée et de sortie (68,70) rapportées dans les orifices extérieurs (56) et (58).

Application aux véhicules automobiles.

## Description

L'invention concerne un dispositif de chauffage d'un liquide de lave-glace, destiné notamment à un véhicule automobile.

On a déjà proposé de chauffer un liquide de lave-glace afin d'améliorer l'efficacité de nettoyage de ce liquide lorsqu'il est projeté sur une surface vitrée, par exemple sur un pare- brise d'un véhicule automobile.

On connaît, d'après les documents FR-A-2 129 629 et EP-A- 0 271 821, des dispositifs de chauffage de ce type qui sont propres à être interposés entre un réservoir de liquide de lave-glace et au moins un gicleur placé en avant d'une surface vitrée à nettoyer.

Ces dispositifs connus comprennent une enceinte limitée par une paroi généralement tubulaire et propre à être traversée par un fluide chaud, ainsi qu'un serpentin logé à l'intérieur de l'enceinte et propre à être traversé par le liquide de lave- glace, ce serpentin étant constitué d'un tube enroulé possédant une multiplicité de spires et deux extrémités se prolongeant respectivement par une tubulure d'entrée de liquide et une tubulure de sortie de liquide traversant à étanchéité la paroi de l'enceinte.

Le serpentin est alors balayé par le fluide chaud qui cède de l'énergie thermique au liquide de lave-glace. Ce fluide chaud est habituellement constitué par le liquide de refroidissement du moteur du véhicule, ou encore par les gaz d'échappement de celui-ci.

Pour obtenir une bonne transmission thermique entre le fluide chaud circulant dans l'enceinte et le liquide de lave-glace circulant dans le serpentin, ce dernier est formé en un matériau métallique doué d'une bonne conductibilité thermique, de préférence en cuivre.

L'enceinte est habituellement réalisée en un matériau métallique ordinaire et les tubes d'entrée et de sortie du serpentin sont alors soudés ou brasés à l'enceinte au niveau des traversées de la paroi.

Dans les dispositifs de chauffage connus de ce type, les tubulures d'entrée et de sortie font partie intégrante du serpentin et sont donc formées du même matériau. Ces tubulures doivent faire saillie à l'extérieur de la paroi de l'enceinte en vue de leur raccordement à des tuyaux d'entrée et de sortie du liquide de lave-glace.

De ce fait, lors de la fabrication du dispositif de chauffage, il est nécessaire de déformer le serpentin pour rapprocher ses deux extrémités libres et permettre l'introduction dans l'enceinte du serpentin ainsi déformé jusqu'à ce que ses deux extrémités se trouvent en regard des traversées ménagées dans le paroi tubulaire de l'enceinte.

Ensuite, il faut écarter les deux extrémités du serpentin pour qu'elles passent par les traversées de la paroi et dépassent ensuite à l'extérieur de l'enceinte.

Un tel procédé de fabrication est compliqué et coûteux à réaliser et se prête mal à une fabrication en grande série.

En outre, les tubulures d'entrée et de sortie présentent toujours la même disposition mutuelle.

L'invention a notamment pour but de remédier aux inconvénients précités.

Elle propose en conséquence un dispositif de chauffage du type défini en introduction, dans lequel l'enceinte comporte deux chambres périphériques dont chacune est limitée par une paroi intérieure munie d'un orifice intérieur débouchant vers l'intérieur de l'enceinte et par une paroi extérieure munie d'un orifice extérieur débouchant vers l'extérieur de l'enceinte, dans lequel les extrémités du serpentin sont engagées à étanchéité respectivement dans les orifices intérieurs des chambres périphériques, et dans lequel les tubulures d'entrée et de sortie sont constituées par des embouts rapportés, engagés à étanchéité respectivement dans les orifices extérieurs des chambres périphériques.

De ce fait, la fabrication du dispositif de chauffage est simplifiée puisqu'il n'est pas nécessaire de déformer d'une manière substantielle le serpentin avant son introduction dans l'enceinte.

En outre, cette fabrication est simplifiée du fait que les tubulures d'entrée et de sortie sont rapportées sur l'extérieur de l'enceinte.

Par ailleurs, il est possible de réaliser les chambres périphériques avec différentes positions mutuelles.

Ainsi, conformément à l'invention, le liquide de lave-glace pénètre dans l'une des deux chambres périphériques par la tubulure d'entrée, circule dans le serpentin pour gagner l'autre chambre périphérique et quitte ensuite le dispositif par la tubulure de sortie.

Dans une forme de réalisation préférée de l'invention, les parois intérieures des chambres périphériques sont définies par des enfoncements, dirigés vers l'intérieur, de la paroide l'enceinte.

Avantageusement, les parois extérieures des chambres périphériques sont définies par une bague rapportée autour de la paroi de l'enceinte.

Selon une autre caractéristique de l'invention, les chambres périphériques sont situées dans des régions sensiblement diamétralement opposées de la paroi de l'enceinte.

Dans une première forme de réalisation de l'invention, les orifices intérieurs s'étendant dans des directions sensiblement radiales de la paroi de l'enceinte.

Dans une autre forme de réalisation de l'invention, les deux orifices intérieurs s'étendent dans des directions sensiblement parallèles aux génératrices de l'enceinte.

De préférence, le serpentin est réalisé en un matériau métallique bon conducteur, avantageusement en cuivre, et les extrémités du serpentin sont soudées ou brasées sur les parois internes des chambres, ces dernières étant également réalisées en un matériau métallique.

Les embouts formant les tubulures d'entrée et de sortie peuvent être formés d'un matériau métallique et être alors soudés sur les parois externes des chambres, ces dernières étant également métalliques.

En variante, les embouts formant les tubulures d'entrée et de sortie sont réalisés en matière plastique et rapportés sur les parois extérieures des chambres périphériques, ces parois étant de préférence en un matériau métallique.

Dans la description qui suit, faite seulement à titre d'exemple, on se réfère aux dessins annexés, sur lesquels :
- la figure 1 est une vue en coupe longitudinale d'un dispositif de chauffage selon une première forme de réalisation de l'invention, cette coupe étant prise suivant la ligne I-I de la figure 2;
- la figure 2 est une vue en coupe suivant la ligne II-II de la figure 1;
- la figure 3 est une vue en coupe longitudinale d'un dispositif de chauffage selon une seconde forme de réalisation de l'invention, la coupe étant prise suivant la ligne III-III de la figure 4; et
- la figure 4 est une vue en coupe selon la ligne IV-IV de la figure 3.

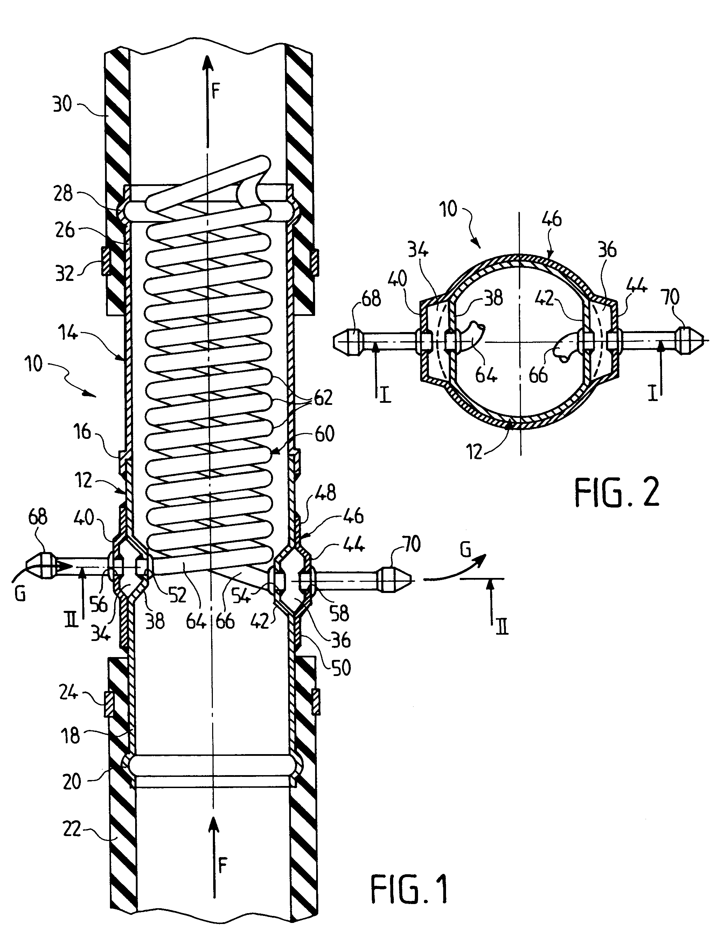

On se réfère tout d'abord aux figures 1 et 2 qui représentent un dispositif de chauffage d'un liquide de lave-glace selon l'invention. Ce dispositif comprend une enceinte 10 limitée par une paroi tubulaire 12 rectiligne et à section circulaire emboîtée dans le prolongement d'une paroi tubulaire 14 rectiligne et à section circulaire, par l'intermédiaire d'un emboîtement 16. En variante, les parois 12 et 14 pourraient être formées d'une seule pièce au lieu d'être emboîtées l'une dans l'autre.

La paroi tubulaire 12 comprend une extrémité ouverte 18 munie d'un bourrelet de retenue 20, sur laquelle est engagé un tuyau souple 22 maintenu par un collier de serrage 24 et servant à l'introduction d'un fluide chaud dans la direction de la flèche F. De façon correspondante, la paroi 14 comprend une extrémité libre 26 munie d'un bourrelet de retenue 28, sur laquelle est engagé un tuyau souple 30 maintenu par un collier de serrage 32. Le tuyau 30 sert à l'évacuation du fluide chaud dans la direction de la flèche F.

L'enceinte 10 définit deux chambres périphériques 34 et 36. La chambre 34 est limitée par une paroi intérieure 38 obtenue par un enfoncement, dirigé vers l'intérieur, de la paroi 12 de l'enceinte 10 et par une paroi extérieure 40 rapportée sur la paroi 12. De façon correspondante, la chambre 36 est limitée par une paroi intérieure 42 obtenue par un enfoncement, dirigé vers l'intérieur, de la paroi 12 de l'enceinte 10 et par une paroi extérieure 44 rapportée autour de la paroi 12. Comme montré à la figure 2, les parois extérieures 40 et 44 sont définies par une bague 46 qui est engagée autour de la paroi 12 et solidarisée à celle-ci. Cette bague est limitée par deux collets 48 et 50 alignés axialement, dont le diamètre interne correspond sensiblement au diamètre externe de la paroi 12.

Avantageusement, la paroi 12 et la bague 46 sont formées d'un matériau métallique et sont soudées entre elles.

Dans l'exemple, les chambres périphériques 34 et 36 sont situées dans des régions diamétralement opposées de la paroi 12.

Les parois 38 et 42 sont munies chacune d'un orifice interne 52 respectivement 54, tous deux dirigés vers l'intérieur de l'enceinte. Dans l'exemple, les orifices 52 et 54 s'étendent dans des directions radiales par rapport à l'axe de l'enceinte tubulaire 10.

Les parois 40 et 44 sont munies respectivement de deux orifices extérieurs 56 et 58 qui communiquent avec l'extérieur de l'enceinte. L'orifice 56 se situe dans l'alignement de l'orifice 52 et l'orifice 58 dans l'alignement de l'orifice 54.

A l'intérieur de l'enceinte 10 est logé un serpentin 60 formé d'un tube enroulé suivant une double hélice possédant des spires hélicoïdales 62 imbriquées les unes dans les autres.Le serpentin 60 est disposé axialement à l'intérieur de l'enceinte de manière qu'un espace soit ménagé entre les spires et les parois tubulaires 12 et 14 et qu'un espace soit également ménagé entre les spires, ces dernières étant non jointives.

Le serpentin 60 possède deux extrémités 64 et 66 qui sont engagées à étanchéité respectivement dans les orifices internes 52 et 54. Le serpentin 60 est avantageusement formé à partir d'un tube métallique, de préférence en cuivre, les extrémités 64 et 66 du serpentin étant alors soudées aux parois 38 et 42.

Le dispositif 10 comprend en outre une tubulure d'entrée 68 réalisée sous la forme d'un embout rapporté à l'extérieur de l'enceinte, cet embout étant introduit à étanchéité dans l'orifice externe 56. Le dispositif comprend en outre une tubulure de sortie 70 constituée d'un embout introduit à étanchéité dans l'orifice 58 de la paroi externe 44.

Les tubulures 68 et 70 peuvent être formées d'un matériau métallique soudé sur la bague 46 ou encore en une matière plastique convenablement fixée à la bague.

L'enceinte 10 est destinée à être parcourue par un fluide chaud circulant dans la direction des flèches F, ce fluide étant constitué par exemple par le liquide de refroidissement d'un moteur à combustion interne d'un véhicule automobile, ou encore par les gaz d'échappement de celui-ci.

Le serpentin 60 est destiné à être parcouru par un liquide de lave-glace. Le liquide de lave-glace provenant d'un réservoir (non représenté) est introduit dans la tubulure d'entrée 68 comme montré par la flèche G, gagne ensuite la chambre périphérique 34 pour circuler ensuite dans le serpentin 60 et gagner l'autre chambre périphérique 36. Le liquide quitte ensuite l'enceinte 36 par la tubulure de sortie 70, comme montré par la flèche G, pour être dirigé vers un ou plusieurs gicleurs disposés en avant d'une surface à essuyer, par exemple d'un pare-brise de véhicule automobile.

Le liquide de lave-glace se trouve ainsi réchauffé par échange thermique avec le fluide chaud circulant à l'intérieur de l'enceinte.

Le montage du dispositif de l'invention est particulièrement aisé puisqu'il suffit d'introduire axialement le serpentin 60 à l'intérieur de la paroi 12 et de présenter les extrémités 64 et 66 du serpentin en regard des orifices correspondants 52 et 54 en rapprochant, le cas échéant, légèrement les deux extrémités l'une de l'autre. Il suffit ensuite de fixer convenablement les extrémités 64 et 66 aux parois 38 et 42, et de fixer également les tubulures 68 et 70 aux parois 40 et 44.

La mise en place du serpentin est facilitée du fait que l'enceinte 10 est formée de deux parois tubulaires 12 et 14 emboîtées l'une sur l'autre.

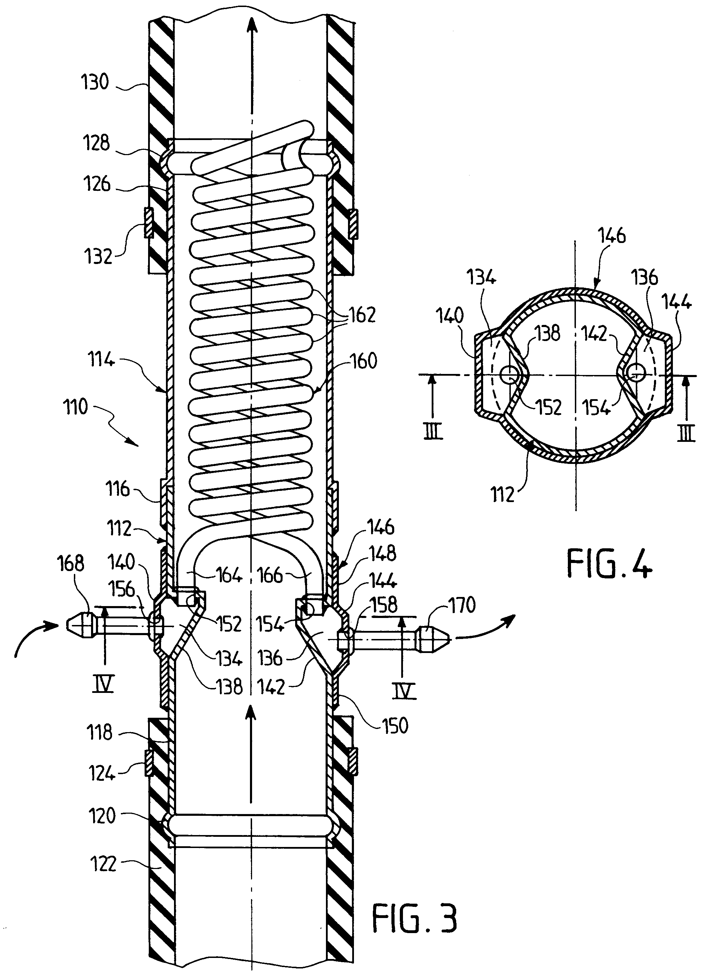

On se réfère maintenant aux figures 3 et 4 qui représentent une autre forme de réalisation de l'invention.

Le dispositif de chauffage représenté aux figures 3 et 4 comprend des éléments généralement semblables à ceux du dispositif des figures 1 et 2. Les éléments comparables sont désignés sous les mêmes références numériques augmentées de 100.

La différence principale par rapport au dispositif des figures 1 et 2 réside dans le fait que les orifices internes 152 et 154 des parois 138 et 142 sont dirigés suivant des directions parallèles entre elles et parallèles aux génératrices de la paroi tubulaire 12. Par conséquent, les extrémités 164 et 166 du serpentin 160 sont disposées suivant des directions parallèles entre elles et parallèles à l'axe du serpentin.

La mise en place du serpentin est particulièrement facile puisqu'il suffit de présenter les extrémités 164 et 166 de celui-ci en regard des extrémités 152 et 154 des parois 138 et 142, et cela sans qu'il soit nécessaire de déformer le serpentin.

Dans la forme de réalisation des figures 3 et 4, les tubulures de sortie 168 et 170 sont toutes deux disposées radialement par rapport à l'axe de l'enceinte.

Dans l'une ou l'autre des formes de réalisation décrites précédemment, il est possible de choisir différentes positions mutuelles des deux chambres périphériques. Celles-ci peuvent être disposées de façon diamétralement opposée ou bien être plus ou moins rapprochées en fonction des conditions d'implantation dans le véhicule automobile considéré. On peut ainsi donner aux tubulures d'entrée et de sortie des orientations mutuelles différentes en fonction des conditions souhaitées.

## Revendications

**1.-** Dispositif de chauffage d'un liquide de lave-glace, comprenant une enceinte (10;110) limitée par une paroi généralement tubulaire (12,14;112,114) et propre à être traversée par un fluide chaud, ainsi qu'un serpentin (60;160) logé à l'intérieur de l'enceinte et propre à être traversé par le liquide de lave-glace, ce serpentin étant constitué d'un tube enroulé possédant une multiplicité de spires (62;162) et deux extrémités (64,66;164,166) se prolongeant respectivement par une tubulure d'entrée de liquide (68;168) et une tubulure de sortie de liquide (70;170) traversant à étanchéité la paroi de l'enceinte, caractérisé en ce que l'enceinte (10;110) comporte deux chambres périphériques (34,36;134,136) dont chacune est limitée par une paroi intérieure (38,42;138,142) munie d'un orifice intérieur (52,54;152,154) débouchant vers l'intérieur de l'enceinte et par une paroi extérieure (40,44;140,144) munie d'un orifice extérieur (56,58;156,158) débouchant vers l'extérieur de l'enceinte, en ce que les extrémités (64,66;164,166) du serpentin (60;160) sont engagées à étanchéité respectivement dans les orifices intérieurs (52,54;152,154) des chambres périphériques (34,36;134,136) et en ce que les tubulures d'entrée et de sortie (68,70;168,170) sont engagées à étanchéité respectivement dans les orifices extérieurs (56,58;156,158) des chambres périphériques (34,36;134,136).

**2.-** Dispositif selon la revendication 1, caractérisé en ce que les parois intérieures (38,42;138,142) des chambres périphériques (34,36;134,136) sont définies par des enfoncements, dirigés vers l'intérieur, de la paroi tubulaire (12;112) de l'enceinte (10).

**3.-** Dispositif selon l'une des revendications 1 et 2, caractérisé en ce que les parois extérieures (40,44;140,144) des chambres périphériques (34,36;134,136) sont définies par une bague (46;146) rapportée autour de la paroi (12;112) de l'enceinte.

**4.-** Dispositif selon l'une des revendications 1 à 3, caractérisé en ce que les chambres périphériques (34,36;134,136) sont situées dans des régions diamétralement opposées de la paroi (12;112) de l'enceinte.

**5.-** Dispositif selon l'une des revendications 1 à 4, caractérisé en ce que les orifices intérieurs (52,54) s'étendent dans des directions sensiblement radiales de la paroi (12) de l'enceinte (10).

**6.-** Dispositif selon l'une des revendications 1 à 4, caractérisé en ce que les orifices intérieurs (152,154) s'étendent dans des directions sensiblement parallèles entre elles et aux génératrices de la paroi (112) de l'enceinte (110).

**7.-** Dispositif selon l'une des revendications 1 à 6, caractérisé en ce que le serpentin (60;160) est en matériau métallique, par exemple en cuivre, et en ce que les extrémités (64,66;164,166) du serpentin sont soudées ou brasées sur les parois internes (38,42;138,142) des chambres (34,36;134,136), ces dernières étant métalliques.

**8.-** Dispositif selon l'une des revendications 1 à 7, caractérisé en ce que les embouts constituant les tubulures d'entrée et de sortie (68,70;168,170) sont métalliques et soudés sur les parois extérieures des chambres, ces dernières étant métalliques.

**9.-** Dispositif selon l'une des revendications 1 à 7, caractérisé en ce que les embouts constituant les tubulures d'entrée et de sortie (68,70;168,170) sont en matière plastique et convenablement reliés aux parois extérieures (40,44;140,144) des chambres périphériques.
